# DEMANDE DE BREVET EUROPEEN

(11) **EP 1 081 874 A1**
(43) Date de publication de la demande: **07.03.2001**
(21) Numéro de dépôt: 00410108.5
(22) Date de dépôt: 30.08.2000
(51) Int. Cl.: H04B 1/58, H04M 11/06

(54) **Circuit hybride d'émission-réception**

(30) Priorité: 30.08.1999 FR 9910990; 22.02.2000 FR 0002192
(71) Demandeur: STMicroelectronics S.A., 94250 Gentilly (FR)
(72) Inventeur: Prat, Gildas, 38100 Grenoble (FR); Chianale, Alain, 38120 Saint Egrève (FR)
(74) Mandataire: de Beaumont, Michel

(57) **Abrégé**

L'invention concerne un circuit hybride formant interface entre une ligne de transmission (1) et des têtes (12, 14) d'émission-réception de signaux haute fréquence dans des bandes de fréquences différentes en émission et en réception, comprenant un transformateur de ligne (8) et des moyens (21, 22) de séparation des bandes d'émission et de réception combinés à des moyens d'annulation d'écho (23).

## Description

La présente invention concerne le domaine des circuits hybrides de conversion et d'isolement entre une ligne de transmission (par exemple, téléphonique) et un équipement utilisateur ou un équipement collectif (par exemple, un central téléphonique ou un serveur de type Internet). L'invention concerne plus particulièrement les circuits hybrides 2 fils-4 fils qui sont destinés à permettre l'envoi et la réception d'un signal utile sur une même ligne de transmission, et qui utilisent un transformateur. Le rôle de ces circuits hybrides est, en particulier, de réaliser une fonction d'annulation d'écho afin d'éviter qu'un signal, extrait en direction d'une tête de réception, soit pollué par un écho provenant d'un signal émis en transmission sur la ligne.

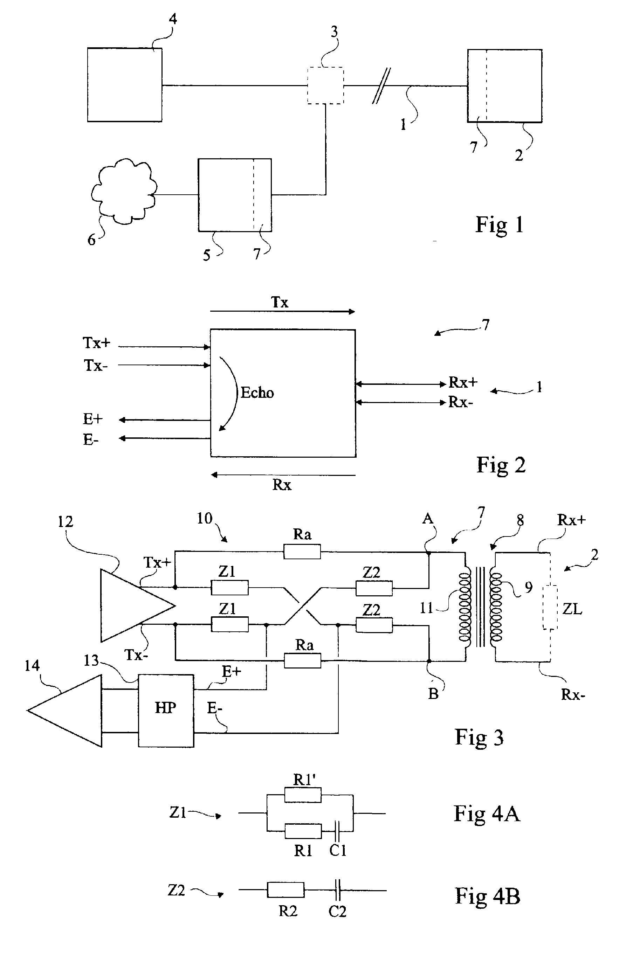

La figure 1 représente, de façon très schématique et simplifiée, un exemple d'application des circuits hybrides auxquels s'applique la présente invention. Cette figure illustre le raccordement de différents équipements sur une ligne téléphonique 1 et, plus précisément, le raccordement d'équipements côté abonné. La ligne 1 est généralement une ligne bifilaire entre un central téléphonique 2 et un élément 3 de raccordement côté abonné. Pour simplifier, on considère un central téléphonique 2, mais on notera que la ligne transite par différents équipements collectifs de type sous-répartiteurs, répartiteurs, etc. Côté abonné, l'élément de raccordement 3 peut être constitué d'un séparateur chargé d'aiguiller la ligne téléphonique soit vers un combiné téléphonique 4, soit vers un modem 5 raccordé à un équipement numérique 6, par exemple un micro-ordinateur. D'autres configurations que celle décrite ci-dessus peuvent, bien entendu, exister côté abonné et côté système collectif. Toutefois, leur exposé détaillé n'apporterait rien de plus à l'exposé de l'invention et sera par conséquent omis pour être parfaitement connu.

Que ce soit côté central ou côté abonné, ces équipements sont équipés d'un circuit hybride 7 servant d'interface entre la ligne téléphonique et les circuits de traitement des signaux haute fréquence ou radiofréquence. Le plus souvent, les combinés téléphoniques sont également équipés de circuits hybrides. Toutefois, l'invention ne s'applique qu'aux circuits destinés à véhiculer des données dans des bandes de fréquences supérieures aux fréquences de la parole.

La figure 2 représente, de façon schématique, un circuit hybride 7 du type auquel s'applique la présente invention. Comme cela a été indiqué précédemment, ce circuit est destiné à permettre d'envoyer et de recevoir un signal utile sur une même ligne bifilaire 1. Côté ligne 1, le circuit hybride 7 comporte deux entrées-sorties Rx+ et Rx-. Côté équipement, le circuit 7 comprend deux entrées Tx+ et Tx- destinées à recevoir un signal à transmettre sur la ligne, et deux sorties E+ et E-destinées à restituer un signal reçu. Les entrées et sorties côté équipement sont destinées à être raccordées à des têtes d'émission et de réception de signaux haute fréquence (non représentées en figure 2), le plus souvent, basées pour la partie en contact avec le circuit hybride 7, sur des circuits amplificateurs à faible bruit. Les deux bornes Rx+ et Rx- côté ligne sont généralement constituées par les deux bornes d'un premier enroulement d'un transformateur d'isolement dont les bornes du deuxième enroulement sont reliées à un circuit d'adaptation d'impédance et d'annulation d'écho permettant la conversion vers le système 4 fils côté équipement. La partie adaptation d'impédance a pour rôle d'adapter l'entrée du transformateur côté équipement à l'impédance de la ligne. La partie annulation d'écho a pour rôle d'éliminer, sur le signal reçu envoyé vers les sorties E+ et E-, un écho provenant d'une transmission depuis les bornes Tx+ et Tx- en direction des bornes Rx+ et Rx-. Dans un circuit hybride destiné à une émission-réception de données, on cherche à obtenir un écho le plus faible possible.

La présente invention concerne plus particulièrement les circuits hybrides destinés à l'émission-réception de signaux haute fréquence dans des bandes séparées, c'est-à-dire où la bande de fréquences allouée à l'émission est différente de la bande de fréquences allouée à la réception. Dans de telles applications, les signaux reçus et délivrés par le circuit hybride 7 sur les bornes E+ et E- sont généralement soumis à un filtrage (par exemple, de type passe-haut pour le côté abonné) pour améliorer l'atténuation de l'écho.

La figure 3 représente un exemple classique de circuit hybride 7 appliqué à une transmission à bandes séparées. Comme cela a été indiqué précédemment, l'interface entre la ligne 2 et un circuit 10 d'adaptation d'impédance et d'annulation d'écho est constituée par un transformateur 8 dont un premier enroulement 9 (désigné arbitrairement comme primaire) est connecté à la ligne 2. A la figure 3, la ligne téléphonique a été schématisée par son impédance ZL aux bornes Rx+ et Rx- de l'enroulement 9 du transformateur 8.

Côté enroulement secondaire 11, la partie adaptation d'impédance du circuit 10 est essentiellement constituée de deux résistances Ra, dites résistances d'attaque en transmission, reliant chaque borne Tx+, Tx- à l'une des bornes A, B de l'enroulement 11. Les bornes Tx+ et Tx- correspondent à des bornes de sortie différentielles d'une tête 12 d'émission haute fréquence. Généralement, les résistances Ra sont dimensionnées en fonction de la partie réelle de l'impédance ZL de la ligne et du rapport N de transformation du transformateur 8. En effet, le transformateur 8 a le plus souvent un rapport de transformation différent de l'unité pour procurer une augmentation du niveau de tension dans le sens de transmission de l'utilisateur vers le central. Généralement, Ra = RL/2N², où RL représente la résistance de l'impédance de ligne ZL.

La fonction d'annulation d'écho est réalisée en utilisant la structure différentielle pour extraire, du signal reçu, l'écho du signal émis. Pour cela, chaque borne Tx+ et Tx- est reliée à la borne B ou A, opposée à celle à laquelle elle est reliée par la résistance Ra, au moyen d'une association en série de deux impédances Z1 et Z2. Les bornes E+ et E- de sortie du circuit hybride sont alors constituées par les points milieu respectifs des associations en série des impédances Z1 et Z2. Ainsi, la borne Tx+ est reliée à la borne E- par une impédance Z1 et cette borne E- est reliée à la borne B par une impédance Z2. La borne Tx- est reliée à la borne E+ par une impédance Z1 et cette borne E+ est reliée à la borne A par une impédance Z2. La fonction de transfert ainsi obtenue permet que la tension aux bornes E+ et E- corresponde à la tension aux bornes A et B, diminuée (au moins en partie) de la tension d'émission aux bornes Tx+ et Tx-.

Un tel circuit 10 d'annulation d'écho fonctionne correctement si la ligne 2 présente son impédance caractéristique, c'est-à-dire si elle peut être assimilée à une résistance. Dans ce cas, avec Z1 = 2Z2, on obtient une élimination parfaite de l'écho avec des impédances purement résistives.

Toutefois, la fréquence du signal reçu (et du signal émis) varie, de sorte que la ligne 2 ne peut pas être assimilée à une résistance pure. De plus, l'impédance de ligne varie d'une ligne à une autre en particulier en fonction de la longueur des lignes. Par conséquent, le circuit d'annulation d'écho ne peut pas être uniquement constitué de résistances.

Dans les systèmes classiques, les impédances Z1 et Z2 sont appelées des impédances de compromis car elles sont choisies en fonction d'un lot caractéristique de lignes téléphoniques, généralement imposé par des normes de télécommunications. On effectue donc un dimensionnement de compromis du circuit hybride. Les impédances de compromis ont généralement les formes illustrées respectivement par les figures 4A et 4B, pour les impédances Z1 et Z2. Les impédances Z1 sont constituées d'une première résistance R1 en série avec un condensateur C1, le tout en parallèle avec une deuxième résistance R1' (figure 4A). Les impédances Z2 sont généralement constituées d'une résistance R2 en série avec un condensateur C2 (figure 4B).

Un premier inconvénient des circuits connus est que le recours à des impédances de compromis ne permet pas une élimination parfaite de l'écho.

De plus, dans le cas d'une transmission de données en bandes séparées, les propriétés spectrales de transmission conduisent à des difficultés supplémentaires en raison de la largeur élevée des bandes de fréquences transitant par le circuit hybride. Par exemple, pour les systèmes de transmission de données à haut débit sur des lignes d'abonné numériques asymétriques (ADSL), c'est-à-dire dont le débit de transmission est différent selon le sens de transmission, le spectre de fréquences utilisé va de 20 kHz à 1,1 MHz.

Dans cet exemple, une première bande de fréquences de 0 à 20 kHz est réservée à la voix. Une deuxième bande de fréquences (de 20 kHz à 1,1 MHz) destinée à la transmission de données est elle-même divisée en deux selon le sens de la transmission. Dans un sens dit "montant" c'est-à-dire de l'utilisateur vers un équipement collectif (par exemple, un serveur Internet), la transmission s'effectue dans la bande de 20 kHz à 138 kHz. Dans le sens dit "descendant", c'est-à-dire de l'équipement collectif vers l'équipement utilisateur, la bande de fréquences utilisée est de 138 kHz à 1,1 MHz. La différence de largeur entre les bandes montante et descendante est liée à la différence de débit souhaité entre les deux sens de transmission. Dans de tels systèmes asymétriques, le débit de données est, par exemple, de l'ordre de 500 kilobits par seconde dans le sens "montant", et de l'ordre de 1,5 à 6 mégabits par seconde dans le sens descendant.

Pour améliorer l'atténuation de l'écho au moyen d'un circuit hybride tel qu'illustré par la figure 3, on prévoit généralement, côté abonné, un filtre passe-haut 13 entre les bornes E+ et E- de sortie du circuit 10 et une tête de réception 14. Le rôle du filtre 13 est de couper les fréquences inférieures à la bande de fréquences utilisée en réception (par exemple, les fréquences inférieures à 138 kHz).

Un inconvénient du recours à un filtre passe-haut 13 en sortie du circuit hybride 7 est que cela introduit des problèmes d'adaptation d'impédance entre le circuit 7 et le filtre 13.

On notera qu'une solution de filtrage numérique n'est pas envisageable en raison de la largeur importante de la bande, combinée à la résolution de la conversion analogique-numérique qu'il est nécessaire d'obtenir en raison du mélange des signaux émis et reçus et du niveau relatif élevé du signal émis.

On notera en outre que, pour des raisons de bruit et de dynamique, le filtre 13 est généralement réalisé au moyen de composants inductifs et capacitifs discrets.

Un autre problème qui se pose dans le cadre des transmissions à haut débit asymétriques, est que le signal à transmettre est de niveau élevé alors que le signal reçu présente un niveau très faible (surtout pour des lignes longues, par exemple de plus de 4-5 km, conduisant à une forte atténuation). Dans le sens de l'émission, l'augmentation de tension opérée par le transformateur est compatible avec les besoins des transmissions à haut débit qui requièrent une puissance d'émission élevée pour dépasser les niveaux de bruit. Par contre, dans le sens de la réception, l'atténuation opérée par le transformateur de ligne est préjudiciable au fonctionnement du système. En effet, le récepteur des signaux doit alors présenter, en entrée, une source de bruit de niveau très faible, ce qui rend sa réalisation délicate. La tension de bruit, en entrée du récepteur, doit être d'autant plus faible que la tension est faible aux bornes du transformateur (de l'enroulement situé côté équipement).

Le document EP-A-0 678 979 décrit un circuit hybride du type auquel se rapporte la présente invention. Ce circuit comprend des moyens de séparation des bandes de fréquences véhiculant des données (40 kHz - 1,7 MHz) par rapport à la bande vocale (< 4 kHz). Des moyens d'annulation d'écho sont prévus de façon distincte de circuits d'impédances associés à un transformateur de ligne. Une séparation des bandes d'émission et de réception est le cas échéant prévue en aval des têtes d'émission-réception par rapport à la ligne.

Selon un premier aspect, la présente invention vise à proposer une nouvelle solution pour éliminer l'écho dans un système de transmission à bandes séparées qui pallie au moins un inconvénient des solutions connues.

L'invention vise, plus particulièrement, à proposer un nouveau circuit hybride pour la transmission de données à haut débit en bandes séparées.

La présente invention vise également à proposer une solution qui supprime le recours à des impédances de compromis.

Selon un deuxième aspect, la présente invention vise en outre à permettre de rendre moins critique le problème de bruit en réception et, en particulier, à permettre, par rapport à un transformateur classique, une augmentation du niveau du signal reçu sans nuire à l'augmentation du signal transmis opérée par le transformateur de ligne.

Pour atteindre ces objets, la présente invention prévoit un circuit hybride formant interface entre une ligne de transmission et des têtes d'émission-réception de signaux haute fréquence dans des bandes de fréquences différentes en émission et en réception, comprenant un transformateur de ligne et des moyens de séparation des bandes d'émission et de réception combinés à des moyens d'annulation d'écho.

Selon un mode de réalisation de la présente invention, les moyens de séparation de bandes sont constitués d'un filtre dont deux premières impédances d'entrée sont directement reliées, respectivement, à deux bornes d'extrémité d'un premier enroulement du transformateur.

Selon un mode de réalisation de la présente invention, deux secondes impédances d'entrée du filtre sont directement reliées, respectivement, à deux bornes d'entrées du circuit, destinées à recevoir un signal à transmettre.

Selon un mode de réalisation de la présente invention, le dimensionnement des composants du filtre et des moyens d'annulation d'écho est indépendant de l'impédance de la ligne et du rapport de transformation du transformateur.

Selon un mode de réalisation de la présente invention, le filtre est du troisième ordre.

Selon un mode de réalisation de la présente invention, le circuit comprend, en série entre chaque borne d'extrémité du premier enroulement du transformateur et une desdites deux bornes d'entrée du circuit, une première et une seconde impédance d'entrée du filtre, les points milieux de ces associations en série étant reliés l'un à l'autre par une cellule LC, et chaque point milieu étant relié, par l'intermédiaire d'un élément capacitif ou inductif d'une impédance de sortie du filtre, directement à une de deux bornes de sortie du circuit qui sont reliées l'une à l'autre par une résistance commune aux deux impédances de sortie.

Selon un mode de réalisation de la présente invention, chaque impédance d'entrée comprend une association en série d'une résistance avec un montage parallèle d'un premier condensateur et d'une inductance, les points milieux respectifs des associations en série des deux premières et des deux secondes impédances d'entrée étant reliés l'un à l'autre par un second condensateur, et lesdites associations appartenant à chaque première impédance d'entrée étant reliées en série avec une desdites associations appartenant aux deux secondes impédances d'entrée, les points milieux de ces liaisons en série étant directement reliés à une de deux bornes de sortie du circuit qui sont reliées l'une à l'autre par une résistance.

Selon un mode de réalisation de la présente invention, chaque borne d'entrée du circuit est reliée, par une résistance d'attaque fonction de l'impédance de la ligne et du rapport de transformation du transformateur en émission, à une borne du premier enroulement du transformateur.

Selon un mode de réalisation de la présente invention, les moyens de séparation de bandes sont constitués d'un filtre passe-haut.

Selon un mode de réalisation de la présente invention, les moyens de séparation de bandes sont constitués d'un filtre passe-bas.

Selon un mode de réalisation de la présente invention, le premier enroulement du transformateur est constitué d'au moins trois enroulements en série dont les nombres de spires respectifs sont fonction des rapports de transformation souhaités en émission et en réception, un signal d'émission étant appliqué aux bornes d'un enroulement central tandis qu'un signal de réception est prélevé aux bornes d'extrémité de l'association en série des enroulements.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1, 2, 3, 4A et 4B qui ont été décrites précédemment sont destinées à exposer l'état de la technique et le problème posé ;
la figure 5 représente, sous forme de schéma-blocs, un premier mode de réalisation d'un circuit hybride destiné à un équipement utilisateur selon la présente invention ;
la figure 6 illustre la caractéristique spectrale d'un système de transmission de données auquel s'applique la présente invention ;
la figure 7 représente un schéma détaillé d'un circuit hybride destiné à un équipement utilisateur selon un premier mode de réalisation de la présente invention ;
la figure 8 représente un schéma détaillé d'un circuit hybride destiné à un équipement collectif selon un deuxième mode de réalisation de la présente invention ;
la figure 9 représente un troisième mode de réalisation d'un circuit hybride destiné à un équipement utilisateur, illustrant un deuxième aspect de la présente invention ; et
la figure 10 représente un quatrième mode de réalisation d'un circuit hybride destiné à un équipement collectif selon le deuxième aspect de l'invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, les détails constitutifs des têtes d'émission-réception haute fréquence ainsi que les systèmes de traitement des données en émission et en réception n'ont pas été détaillés et ne font pas l'objet de la présente invention.

Une caractéristique de la présente invention est de prévoir une séparation des bandes de fréquences en amont du circuit d'annulation d'écho. Ainsi, selon l'invention, on prévoit de tirer profit du fait que la transmission de données s'effectue en bandes séparées pour éliminer, le plus près possible de la ligne, les fréquences ne correspondant pas à la bande de réception. Selon l'invention, on effectue la séparation de bandes dans le circuit hybride, le plus près possible du transformateur.

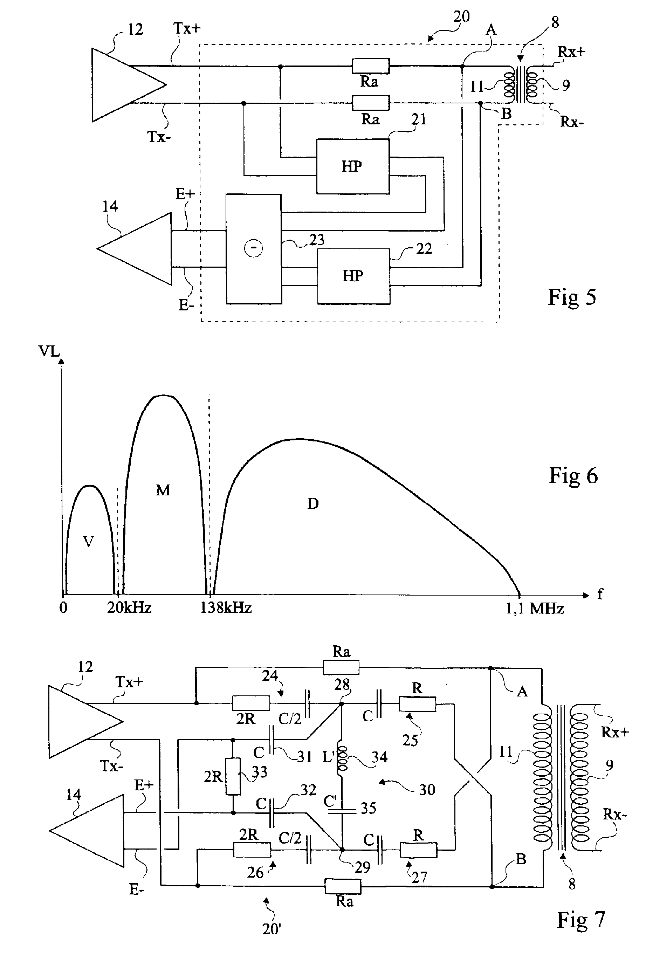

La figure 5 représente, de façon très schématique et sous forme de blocs, un mode de réalisation de la présente invention. La représentation de la figure 5 est fonctionnelle, c'est-à-dire qu'elle a pour objet de faire comprendre le principe utilisé par l'invention plutôt que la structure détaillée d'un circuit hybride qui sera quant à elle mieux comprise en relation avec les figures 7 à 10.

Comme précédemment, un circuit hybride 20 de l'invention est basé sur l'utilisation d'un transformateur 8 dont un premier enroulement 9 est relié par ses deux bornes Rx+ et Rx- à une ligne de transmission (non représentée) et dont un deuxième enroulement 11 est situé côté équipement utilisateur. Toujours de façon classique, le circuit hybride 20 est destiné à être associé à des têtes d'émission 12 et de réception 14 de signaux haute fréquence, ayant des structures différentielles. Côté équipement utilisateur, le circuit hybride 20 comprend deux bornes d'entrée Tx+ et Tx- correspondant aux sorties de la tête d'émission 12 et destinées aux signaux haute fréquence à transmettre en direction de la ligne. Le circuit 20 comporte également deux bornes de sortie E+ et E- chargées de délivrer les signaux reçus depuis la ligne, après élimination de l'écho des signaux transmis.

Comme dans un circuit hybride classique, les bornes Tx+ et Tx- sont chacune reliée, par l'intermédiaire d'une résistance Ra d'adaptation d'impédance, à une des bornes A, B de l'enroulement 11 du transformateur 8.

Une caractéristique de la présente invention est que, fonctionnellement, le reste du circuit hybride est constitué d'un filtre formé d'éléments 21 et 22 dont les entrées respectives prélèvent des signaux Tx+ et Tx- et les signaux aux bornes A et B du transformateur 8. Dans le mode de réalisation illustré par la figure 5 qui s'applique à un circuit hybride placé côté équipement utilisateur, le filtre est un filtre passe-haut. Les éléments 21 et 22 sont ici destinés à ne laisser passer que la bande de fréquences correspondant à la réception et à rejeter la bande de transmission. Les sorties des filtres 21 et 22 sont envoyées dans un soustracteur 23 dont le rôle est de terminer l'annulation d'écho. Les sorties du soustracteur 23 constituent les bornes E+ et E- du circuit hybride 20 de l'invention et sont, de préférence, directement envoyées sur une tête de réception haute fréquence 14 classique. On peut considérer que l'écho réel est prélevé sur les bornes A et B tandis qu'un écho estimé est présent sur les bornes Tx+ et Tx-.

Ainsi, l'invention combine les fonctions de séparation de bandes et d'annulation d'écho dans un même circuit. Le fait d'effectuer la séparation de bandes le plus près possible du transformateur et en amont du soustracteur d'annulation d'écho fait que cet écho est déjà pratiquement complètement éliminé par le filtrage.

La figure 6 représente la caractéristique spectrale (par exemple, la tension de ligne VL en fonction de la fréquence) d'un système de transmission de données auquel s'applique la présente invention. Il s'agit, par exemple, d'un système de transmission de données à haut débit, par exemple, sur une ligne d'abonné numérique asymétrique. Comme l'illustre la figure 6, une première plage V de fréquences (par exemple de 0 à 20 kHz) est destinée à la parole et est généralement dirigée vers un combiné téléphonique en amont du circuit hybride 20, par exemple, au moyen du séparateur 3 de la figure 1.

Le reste du spectre est destiné aux transmissions de données. Une première bande de fréquences M est destinée au sens montant, c'est-à-dire de l'utilisateur vers le système collectif et correspond, dans l'exemple de la figure 5, aux signaux transmis Tx. Une deuxième bande D est destinée au sens descendant, c'est-à-dire depuis le système collectif vers l'utilisateur et correspond, dans l'exemple de la figure 5, à la réception. Dans l'exemple représenté à la figure 6, la bande M s'étend de 20 kHz à environ 138 kHz, et la bande D s'étend de 138 kHz à environ 1,1 MHz. Bien que la figure 6 ne soit pas à l'échelle, le niveau le plus élevé associé à la plage M symbolise l'amplification opérée en émission par le transformateur de ligne.

Selon le mode de réalisation de la présente invention appliqué à un circuit hybride côté équipement utilisateur, le système de filtrage 21, 22 passe-haut du circuit hybride 20 est dimensionné pour couper les fréquences des bandes V et M.

La figure 7 représente un premier mode de réalisation détaillé d'un circuit hybride 20' selon la présente invention. Le schéma de la figure 7 s'applique à un circuit hybride côté utilisateur, c'est-à-dire pour lequel l'émission correspond à la bande inférieure (M, figure 6) et la réception correspond à la bande supérieure D.

Dans le mode de réalisation de la figure 7, chaque borne Tx+, Tx- est reliée à la borne, respectivement B, A, opposée à celle à laquelle elle est reliée par une résistance Ra, par une association en série de deux circuits RC, respectivement 24 et 25 entre la borne Tx+ et la borne B et 26 et 27 entre la borne Tx- et la borne A. Chaque circuit RC est constitué d'une association en série d'une résistance et d'un condensateur. Selon l'invention, chaque circuit RC 24, 25, 26, 27 constitue, non seulement un élément du soustracteur de l'éliminateur d'écho, mais également une impédance d'entrée d'un filtre passe-haut qui, dans cet exemple, est d'ordre 3. On peut considérer que les impédances 24 et 26 définissent les impédances d'entrée de l'écho estimé tandis que les impédances 25 et 27 définissent les impédances d'entrée de l'écho réel. Les points milieux respectifs 28 et 29 des associations en série des circuits 24, 25 et 26, 27 sont reliés l'un à l'autre par un circuit LC série 30 constitutif du filtre. Le point 28 est également relié, par l'intermédiaire d'un condensateur 31, à la borne E-, et le point 29 est relié, par l'intermédiaire d'un condensateur 32, à la borne E+. Les bornes E- et E+ sont en outre reliées l'une à l'autre au moyen d'une résistance 33. Les condensateurs 31 et 32 forment, avec la résistance 33, des impédances de sortie du filtre. Le circuit LC 30, formé d'une inductance 34 et d'un condensateur 35 en série, a uniquement pour rôle de participer à la fonction de filtrage. Ainsi, seuls les circuits RC 24, 25, 26, 27, les condensateurs 31, 32 et la résistance 33 ont une double fonction qui est de participer à la réalisation du soustracteur et à une impédance d'entrée ou de sortie du filtre, ici du troisième ordre.

Les valeurs respectives des résistances et condensateurs constitutifs des circuits RC 24, 25, 26 et 27 sont indépendantes du rapport de transformation du transformateur 8 et sont choisies en fonction de la bande passante du filtre à réaliser. Ces valeurs doivent cependant respecter la fonction de soustraction souhaitée. Pour obtenir une telle fonction de transfert, en supposant que les résistances et condensateurs des circuits 25 et 27 ont pour valeurs respectives R et C, les résistances et condensateurs des circuits 24 et 26 auront alors pour valeurs respectives 2R et C/2. De même, les condensateurs 31 et 32 auront pour valeur C et la résistance 33 aura pour valeur 2R. L'inductance 34 de valeur L' et le condensateur 35 de valeur C' sont quant à eux indépendants de la fonction de soustraction et ne seront dimensionnés qu'en fonction des caractéristiques souhaitées pour le filtrage.

Les valeurs à donner aux différents composants d'un circuit hybride selon l'invention sont à la portée de l'homme du métier à partir des caractéristiques souhaitées pour le filtre, en utilisant des outils classiques de synthèse de filtres (par exemple, des tables).

Un avantage de la présente invention est qu'elle diminue le nombre de composants discrets nécessaires pour la réalisation des fonctions de filtrage et d'annulation d'écho. En effet, comme cela a été indiqué précédemment, certains composants sont désormais partagés par les deux fonctions.

Un autre avantage de la présente invention est qu'elle supprime le recours habituel aux impédances de compromis. En effet, les impédances sont désormais dimensionnées pour la fonction de filtrage et non en fonction des impédances caractéristiques des lignes. Cela est dû au fait que le filtrage est effectué fonctionnellement en amont de l'annulation d'écho.

Les inventeurs ont par ailleurs constaté que l'atténuation en réception, provoquée par la combinaison de l'annulation d'écho et du filtrage, est moins importante que dans un montage classique associant un circuit hybride et un filtre en aval.

Les inventeurs ont également constaté une amélioration sensible (de l'ordre de 20 dB) de la réjection de l'écho sur une charge résistive nominale, ceci alors que le gain en transmission n'est pas affecté et que le gain en réception est amélioré.

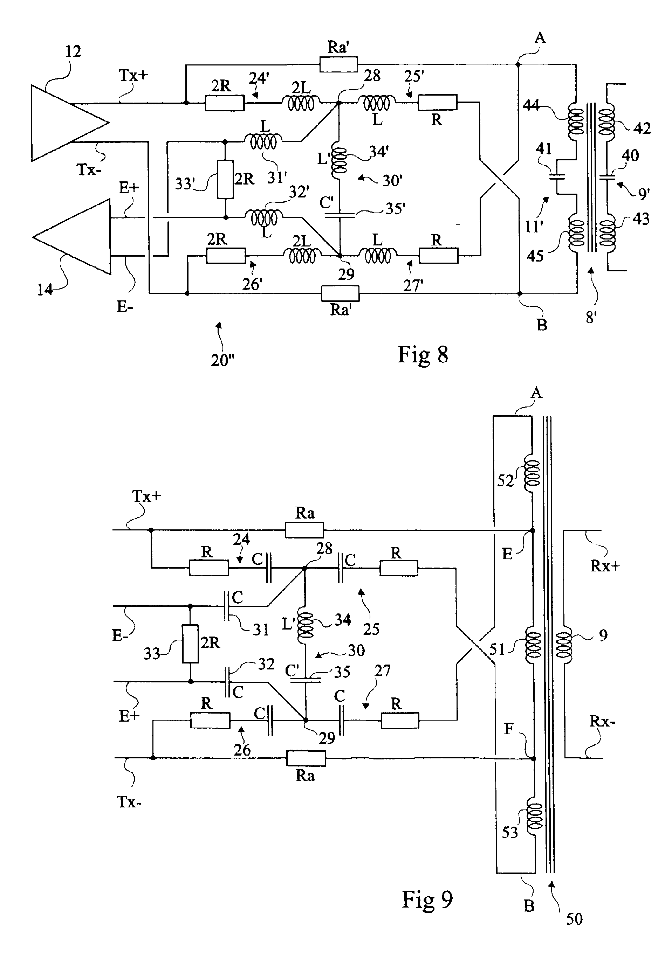

La figure 8 représente un deuxième mode de réalisation d'un circuit hybride 20" selon la présente invention destiné, ici, à être placé côté central téléphonique ou équipement collectif et non plus côté équipement utilisateur. Une différence importante est que, côté équipement collectif, le filtrage à réaliser pour éliminer l'écho de transmission est désormais un filtrage passe-bas et non plus un filtrage passe-haut. En effet, ce que l'on souhaite récupérer en réception est désormais la bande M émise par un utilisateur (par exemple, par l'intermédiaire d'un circuit hybride 20' tel qu'illustré par la figure 7), la bande D correspondant à la bande d'émission.

La structure du circuit 20" de la figure 8 est similaire à celle exposée en relation avec la figure 7. Les seules différences sont que les circuits RC 24, 25, 26 et 27 sont remplacés par des circuits LC 24', 25', 26' et 27', et que les condensateurs 31 et 32 sont, dans ce mode de réalisation, remplacés par des inductances 31' et 32', les bornes E+ et E- étant reliées par une résistance 33'. Bien entendu, pour un dimensionnement en filtre passe-bas, l'inductance 34' et le condensateur 35' en série, constitutifs de l'élément central de filtrage 30', présenteront des valeurs différentes par rapport au montage de la figure 7. Comme pour le mode de réalisation de la figure 7, les résistances d'attaque en transmission Ra' dépendent du rapport de transformation du transformateur 8' et de l'impédance de ligne (non représentée).

On notera que, comme précédemment, les valeurs respectives des composants du filtre et de l'annulateur d'écho sont indépendantes du rapport de transformation. Ainsi, en reprenant une valeur R pour les résistances des circuits 25' et 27', on utilisera une valeur 2R pour les résistances des circuits 24' et 26' et pour la résistance 33'. De même, pour une valeur L des inductances des circuits 25' et 27', on utilisera une valeur 2L pour les inductances des circuits 24' et 26' et L pour les inductances 31' et 32'. Pour mieux faire comprendre leurs rôles respectifs, on a affecté les différents composants des impédances 24', 25', 26', 27' et 30' de valeurs identifiées par les mêmes lettres qu'en figure 7, bien que les valeurs R, L' et C' soient en pratique différentes d'un mode de réalisation à l'autre. Les lettres R, L et C identifient les valeurs des impédances dépendant non seulement de la réponse souhaitée pour le filtre mais également de la fonction d'annulation souhaitée (et des impédances caractéristiques des lignes) tandis que les lettres L' et C' identifient les valeurs dépendant uniquement de la réponse souhaitée pour le filtre.

Dans le mode de réalisation de la figure 8, chaque enroulement 9' et 11' du transformateur 8' a été représenté avec insertion d'un condensateur, respectivement 40, 41, entre deux parties 42, 43 et 44, 45 de l'enroulement. Il s'agit là d'une constitution parfaitement classique d'un transformateur de ligne dont le rôle est de réaliser un filtrage passe-haut pour éliminer la bande V (figure 6) correspondant à la voix. Le recours à l'un ou l'autre des modes de réalisation du transformateur de ligne des figures 7 et 8 n'a pas d'incidence sur la présente invention.

Une telle variante de réalisation est cependant préférable dans le mode de réalisation de la figure 8, car la bande V n'est pas éliminée par le filtre interne au circuit de l'invention qui est, dans ce cas, un filtre passe-bas. Toutefois, la bande V peut avoir été filtrée en amont (séparateur 3, figure 1).

On notera que le filtrage classique de la bande V dans le transformateur ne peut constituer une solution, même partielle, aux problèmes que vise à résoudre l'invention. En effet, au sein du transformateur, les deux sens de transmission sont touchés par le filtre. Par conséquent, une transposition à la séparation de bandes de l'invention est à écarter.

On notera également que, en pratique, les circuits LC 30 et 30' des filtres des figures 7 et 8 pourront être réalisés par des circuits constitués de deux inductances en série entre lesquelles est interposé un condensateur, ou par une inductance divisée en deux parties formant un transformateur aux bornes duquel on connecte le condensateur 35 (ou 35').

La relation liant la valeur des résistances d'attaque en transmission (Ra, figure 7 et Ra', figure 8) au transformateur et à la ligne, est de façon classique Ra (ou Ra') = RL/2N², où RL représente la résistance caractéristique de ligne et où N représente le rapport de transformation du transformateur du circuit hybride.

La figure 9 représente un troisième mode de réalisation de la présente invention qui vise en outre à satisfaire un autre objet qui est d'améliorer le niveau du signal en réception. L'exemple de la figure 9 a été pris en relation avec un équipement utilisateur, c'est-à-dire associé à un filtre passe-haut.

Selon ce mode de réalisation, on utilise un transformateur 50 comprenant, côté équipement, trois enroulements 51, 52, 53 en série. Un enroulement central 51 est destiné à participer à l'émission, c'est-à-dire que ses bornes E et F sont reliées, par l'intermédiaire des résistances Ra du circuit hybride, aux bornes Tx+ et Tx-. Les enroulements d'extrémité 52 et 53 sont destinés, associés en série avec l'enroulement 51, à participer à la réception. Côté ligne, le transformateur 50 comprend un enroulement 9 relié aux bornes Rx+ et Rx- comme dans le mode de réalisation de la figure 7.

Le recours à un transformateur de ligne tel qu'illustré par la figure 9 permet de ne pas atténuer la tension du signal en réception tout en provoquant une élévation de tension en émission. Pour cela, le rapport de transformation en émission est lié au rapport entre le nombre de spires des enroulements 9 et 51, tandis que le rapport de transformation en réception est lié au rapport entre la somme du nombre des spires des enroulements 51, 52 et 53, et le nombre de spires de l'enroulement 9. De préférence, ce rapport en réception est égal à 1.

Le reste du circuit est de structure semblable à la structure illustrée en relation avec la figure 7. Une différence est cependant que les circuits RC 25 et 27 sont connectés aux extrémités libres respectives B, A des enroulements 53 et 52 qui sont distinctes des bornes E et F auxquelles sont reliées les résistances Ra.

Une autre différence est liée aux rapports entre les valeurs respectives des résistances et condensateurs du filtre. En effet, pour respecter désormais la fonction de soustraction de l'écho provenant de la transmission, les valeurs des résistances et des condensateurs des circuits 24, 25, 26 et 27 sont désormais toutes identiques (R, C). De même, les condensateurs 31 et 32 ont pour valeur C et la résistance 33 a pour valeur 2R.

On notera que le choix de valeurs identiques R et C pour les impédances 24, 25, 26 et 27 constitue un mode de réalisation simplifiant les déterminations par calcul des valeurs à donner aux différents composants. On notera cependant que les valeurs des impédances 24 et 26 dépendent, entre autres, des impédances des lignes pour lesquelles est destiné le circuit hybride. Ainsi, selon la valeur moyenne de ces impédances de ligne et leur plage de variation, on peut optimiser le système pour une famille de lignes en prévoyant, pour les composants des impédances 24 et 26 qui correspondent aux impédances intervenant sur l'écho estimé présent aux bornes Tx+ et Tx-, des valeurs différentes de celles des composants des impédances 25 et 27 qui correspondent aux impédances intervenant sur l'écho réel aux bornes A et B. Plus précisément, on adaptera le rapport entre les parties réelles des impédances 24 et 26 (et entre celles des impédances 26 et 27) et le rapport entre leur parties imaginaires, ces rapports pouvant être différents l'un de l'autre. La détermination des valeurs s'effectuera, en pratique, à partir de simulations sur des lignes modélisées par des impédances afin d'optimiser les performances du circuit hybride pour la valeur moyenne d'impédance caractéristique de ligne choisie et la plage de variation de ces impédances caractéristiques. Cette optimisation peut bien entendu être mise en oeuvre dans les modes de réalisation décrits précédemment en relation avec les figures 7 et 8. Les rapports entre les impédances 24 et 25 (24' et 25') et entre les impédances 26 et 27 (26' et 27') seront alors légèrement différent de 2.

On constate donc qu'un transformateur multi-enroulement tel qu'illustré par la figure 9 présente non seulement l'avantage de ne pas atténuer le signal en réception tout en permettant une élévation du niveau de tension en transmission, mais permet également, en aval, une structure du circuit d'élimination d'écho qui participe à accroître le niveau de réception. En effet, la transmittance en réception du circuit d'élimination d'écho est désormais plus élevée qu'avec un schéma tel qu'illustré par la figure 7.

On notera qu'un transformateur 50 tel qu'illustré par la figure 9 peut également avoir la structure illustrée en figure 8, c'est-à-dire que les enroulements 9 et 51 peuvent comprendre des condensateurs intermédiaires.

Côté équipement collectif, le mode de réalisation de la figure 9 peut être transposé en remplaçant les condensateurs C des impédances 24, 25, 26, 27, 31 et 32 par des inductances L afin d'obtenir un filtre passe-bas (le changement des valeurs C' et L' pour passer d'une fonction passe-haut à un filtre passe-bas ne modifiant pas le schéma). Toutefois, le nombre d'inductances alors nécessaire peut être considéré comme trop élevé.

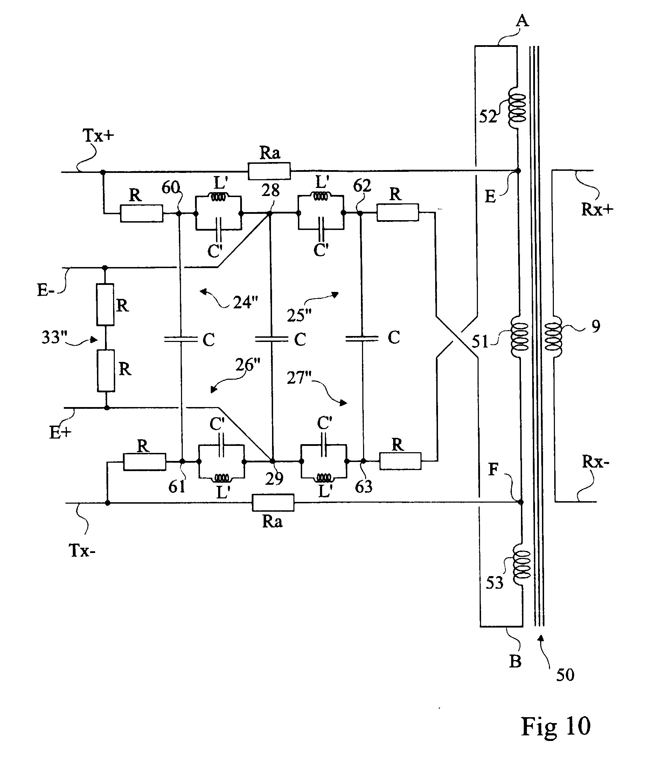

Ainsi, selon un quatrième mode de réalisation, illustré par la figure 10, appliqué à un filtrage passe-bas, l'invention prévoit de réaliser les impédances 24", 25", 26" et 27" sous la forme de circuits RLC constitués chacun d'une résistance R, en série avec un montage parallèle d'un condensateur C' et d'une inductance L' et partageant deux à deux un condensateur C. Plus précisément, les bornes Tx+ et Tx- sont chacune reliées, par une association en série d'une résistance R avec un montage parallèle d'une inductance L' avec un condensateur C', aux points 28 et 29. Les points milieux 60 et 61 de ces associations en série sont reliés par un condensateur C participant à la définition des impédances d'entrée respectives 24" et 26". Côté écho réel, les bornes A et B sont chacune reliée, par une association en série d'une résistance R avec un montage parallèle d'une inductance L' avec un condensateur C', aux points 28 et 29. Les points milieux 62 et 63 de ces associations en série sont reliés par un condensateur C participant à la définition des impédances d'entrée respectives 25" et 27". Les points 28 et 29 sont en outre reliés l'un à l'autre par un condensateur C participant à la définition des impédances de sortie, le condensateur C étant en parallèle avec la résistance 33". En figure 10, pour illustrer que chaque impédance de sortie comprend une résistance, on a représenté la résistance 33" (33 ou 33' de valeur 2R des figures 7 à 9) sous la forme de deux résistances de valeur R en série.

On notera que les différents composants ont été identifiés par des lettres R, C, L' et C' ayant la même signification que précédemment. Ainsi, les impédances d'entrée 24", 25", 26" et 27" comprennent ici des composants C' et L' remplissant fonctionnellement la fonction du circuit LC 30' de la figure 8. On notera toutefois que, ici encore, les valeurs des impédances d'entrée 24" et 26" pourront être différentes de celles des impédances d'entrée 25" et 27" pour optimiser le circuit aux lignes auxquelles il est destiné.

Un avantage du mode de réalisation de la figure 10 est qu'il minimise le nombre d'inductances nécessaires à la réalisation du circuit. Outre le fait qu'il est en général préférable d'utiliser des condensateurs que des inductances pour des raisons d'encombrement et de coût, le recours à des condensateurs permet une meilleure optimisation du circuit par le plus grand choix de valeurs dans les composants de série disponibles.

On notera que les points 28 et 29 sont désormais directement reliés aux bornes E+ et E-. Cela peut constituer un avantage pour la réalisation du circuit hybride en simplifiant le tracé entre le circuit hybride et la tête de réception.

On notera également que la transformation d'un circuit ayant une structure dite en étoile (figures 7, 8, 9) en un circuit ayant une structure dite en triangle (figure 10) peut également s'appliquer au mode de réalisation de la figure 8 pour minimiser le nombre d'inductances. Dans ce cas, les impédances d'entrée côté tête d'émission 12 comprennent, chacune, une association en série d'une résistance 2R avec un montage parallèle d'un condensateur C'/2 et d'une inductance 2L', les points milieu des associations en série étant reliés par un condensateur C/2. Les impédances d'entrée côté transformateur comprennent, chacune, une association en série d'une résistance R avec un montage parallèle d'un condensateur C' et d'une inductance L', les points milieu des associations en série étant reliés par un condensateur C. Les impédances de sorties sont constituées d'un condensateur C reliant les points 28 et 29, monté en parallèle avec la résistance 33".

Bien entendu, la présente invention est susceptible de diverses variantes et modifications qui apparaîtront à l'homme de l'art. En particulier, les dimensionnements des différents composants du circuit hybride de l'invention sont à la portée de l'homme du métier à partir des indications fonctionnelles données ci-dessus et des plages de fréquences de fonctionnement.

De plus, bien que l'invention ait été exposée ci-dessus en relation avec un circuit hybride destiné à une transmission de données à haut débit de type ADSL, la présente invention s'applique à toute transmission de données en bandes séparées.

En outre, si un filtre d'ordre 3 constitue un mode de réalisation préféré pour le compromis offert entre la qualité du filtrage et la simplicité du montage allié au partage des impédances d'entrée avec la fonction de soustraction, on pourra avoir recours à des filtres d'un ordre différent.

Enfin, si pour clarifier l'exposé, on a fait référence à des résistances, condensateurs et inductances, il ne s'agit pas nécessairement d'éléments individuels mais d'éléments résistifs, capacitifs et inductifs pouvant être individuellement constitués, respectivement, de plusieurs résistances, condensateurs et inductances associés en série et/ou parallèle. Dans le même esprit, les inductances (par exemple, L' des impédances d'entrée de la figure 10) pourront être associées deux à deux dans un transformateur pour obtenir une réjection du mode commun dans la structure différentielle.

## Revendications

1. Circuit hybride formant interface entre une ligne de transmission (1) et des têtes (12, 14) d'émission-réception de signaux haute fréquence dans des bandes de fréquences différentes en émission et en réception, comprenant un transformateur de ligne (8, 8', 50), caractérisé en ce qu'il comprend des moyens de séparation des bandes d'émission et de réception (21, 22) combinés à des moyens d'annulation d'écho (23).

2. Circuit selon la revendication 1, caractérisé en ce que les moyens de séparation de bandes sont constitués d'un filtre dont deux premières impédances d'entrée (25, 27 ; 25', 27' ; 25", 27") sont directement reliées, respectivement, à deux bornes d'extrémité (A, B) d'un premier enroulement (11 ; 11' ; 52, 51, 53) du transformateur (8, 8', 50).

3. Circuit selon la revendication 2, caractérisé en ce que deux secondes impédances d'entrée (24, 26 ; 24', 26' ; 24", 26") du filtre sont directement reliées, respectivement, à deux bornes d'entrées (Tx+, Tx-) du circuit, destinées à recevoir un signal à transmettre.

4. Circuit selon la revendication 2 ou 3, caractérisé en ce que le dimensionnement des composants (24, 25, 26, 27, 30, 31, 32, 33 ; 24', 25', 26', 27', 30', 31', 32', 33' ; 24", 25", 26", 27", C, 33") du filtre et des moyens d'annulation d'écho est indépendant de l'impédance de la ligne (2) et du rapport de transformation du transformateur (8, 8', 50).

5. Circuit selon l'une quelconque des revendications 2 à 4, caractérisé en ce que le filtre (24, 25, 26, 27, 30, 31, 32, 33 ; 24', 25', 26', 27', 30', 31', 32', 33'; 24", 25", 26", 27", C, 33") est du troisième ordre.

6. Circuit selon la revendication 5, caractérisé en ce qu'il comprend, en série entre chaque borne d'extrémité (A, B) du premier enroulement (11 ; 11' ; 52, 51, 53) du transformateur (8, 8', 50) et une desdites deux bornes d'entrée (Tx-, Tx+) du circuit, une première (27, 25 ; 27', 25') et une seconde (26, 24 ; 26', 24') impédance d'entrée du filtre, les points milieux (29, 28) de ces associations en série étant reliés l'un à l'autre par une cellule LC (30 ; 30'), et chaque point milieu (29, 28) étant relié, par l'intermédiaire d'un élément capacitif (31, 32) ou inductif (31', 32') d'une impédance de sortie (32, 31, 33 ; 32', 31', 33') du filtre, directement à une de deux bornes (E+, E-) de sortie du circuit qui sont reliées l'une à l'autre par une résistance (33 ; 33') commune aux deux impédances de sortie.

7. Circuit selon la revendication 5, caractérisé en ce que chaque impédance d'entrée (24", 25", 26", 27") comprend une association en série d'une résistance (R) avec un montage parallèle d'un premier condensateur (C') et d'une inductance (L'), les points milieux respectifs (60, 61, 62, 63) des associations en série des deux premières et des deux secondes impédances d'entrée étant reliés l'un à l'autre par un second condensateur (C), et lesdites associations appartenant à chaque première impédance d'entrée étant reliées en série avec une desdites associations appartenant aux deux secondes impédances d'entrée, les points milieux (28, 29) de ces liaisons en série étant directement reliés à une de deux bornes (E+, E-) de sortie du circuit qui sont reliées l'une à l'autre par une résistance (33").

8. Circuit selon la revendication 6 ou 7, caractérisé en ce que chaque borne d'entrée (Tx+, Tx-) du circuit est reliée, par une résistance d'attaque (Ra) fonction de l'impédance de la ligne (2) et du rapport de transformation du transformateur (8, 8', 50) en émission, à une borne (A, B ; E, F) du premier enroulement (11, 11', 51) du transformateur.

9. Circuit selon l'une quelconque des revendications 1 à 8, caractérisé en ce que les moyens de séparation de bandes sont constitués d'un filtre passe-haut (24, 25, 26, 27, 30, 31, 32, 33).

10. Circuit selon l'une quelconque des revendications 1 à 89, caractérisé en ce que les moyens de séparation de bandes sont constitués d'un filtre passe-bas (24', 25', 26', 27', 30', 31', 32', 33' ; 24", 25", 26", 27", C, 33").

11. Circuit selon une quelconque des revendications 1 à 10, caractérisé en ce que le premier enroulement du transformateur (50) est constitué d'au moins trois enroulements en série (51, 52, 53) dont les nombres de spires respectifs sont fonction des rapports de transformation souhaités en émission et en réception, un signal d'émission étant appliqué aux bornes (E, F) d'un enroulement central (51) tandis qu'un signal de réception est prélevé aux bornes d'extrémité (A, B) de l'association en série des enroulements.
